# EUROPEAN PATENT SPECIFICATION

(11) **EP 1 731 019 B1**
(45) Date of publication and mention of the grant of the patent: **08.10.2008**
(21) Application number: 06115129.6
(22) Date of filing: 08.06.2006
(51) Int. Cl.: A01F 12/16, A01D 75/18

(54) **Acoustic stone detection for a feeder house on an agricultural combine.**
Akustische Detektion von Steinen für ein Schrägfördergehäuse eines Mähdreschers
Détection acoustique de pierres pour convoyeur d'une moissonneuse-batteuse

(30) Priority: 13.06.2005 US 689926 P; 10.06.2005 US 689250 P; 24.02.2006 US 361908; 31.03.2006 US 396082
(43) Date of publication of application: 13.12.2006
(73) Proprietor: CNH Belgium N.V., 8210 Zedelgem (BE)
(72) Inventor: Berger, John G., Landisville, PA 17538 (US); Heinsey, David N., Stevens, PA 17578 (US); Crego, John B., New Holland, PA 17557 (US); Moyer, Terry S., Denver, PA 17517 (US)
(74) Representative: CNH IP Department

(56) References cited:
- EP-A- 1 044 597
- FR-A- 2 281 712
- US-A- 4 294 062

## Description

This invention relates to the improvement of a feeder house on an agricultural combine. More specifically, the invention allows for the improved acoustic detection and ejection of a stone or other hard foreign object from the feeder house.

Mechanical harvesting of grain has taken place for decades. However, efforts continue in the attempt to make harvesting operations more efficient and effective. A combine harvester generally includes a header, which cuts the crop. The header then moves the cut crop into a feeder house. The feeder house lifts the cut crop into the threshing and separation areas of the combine. The grain is separated from the stalk by a rotor or threshing system. The grain is then moved and stored in a grain tank. The chaff and trash are deposited from the rear of the combine. The grain stored in the grain tank is eventually discharged through a grain tank unload tube. An operator usually runs these various operations from a glass-enclosed cab. Typically, the cab is located above and behind the header and feeder house.

There are a variety of agricultural combine harvesters and their operations are well known in the art. For examples of such harvesters, reference US-A-4,846,198, which illustrates the conventional and twin rotor threshing and separating systems of a harvester as well as other major systems of the harvester. US-A-4,332,262 also illustrates the primary systems of a conventional harvester. For further details regarding various agricultural harvester systems, review US-A-4,522,553; US-A-4,800,711; US-A-4,866,920; US-A-4,907, 402; US-A-4,967,544; and US-A-5,155,984.

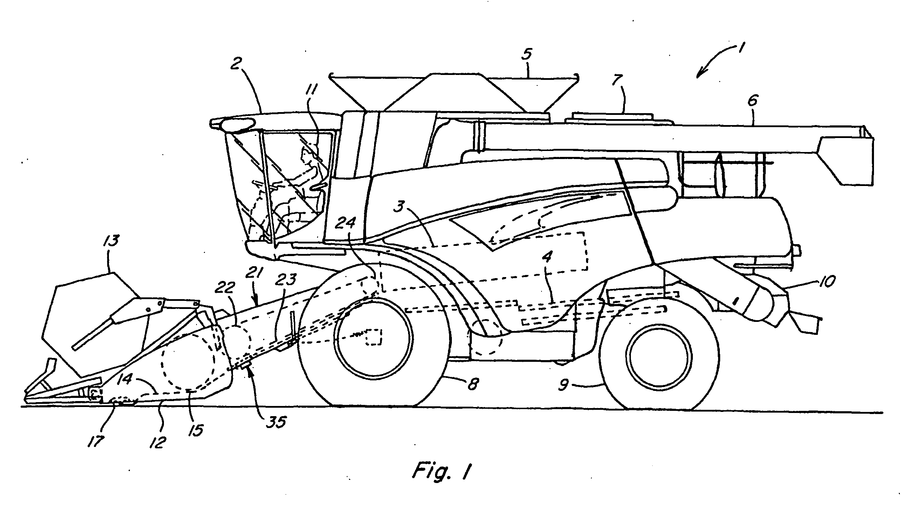

The previously mentioned feeder house typically consists of a conveying chain, which pushes the cut crop from the header to the front of the threshing system. The conveying chain has several crosspieces to assist in moving the crop and to ensure proper spacing. The conveying chain is powered and also positioned by a front drum and a rear drum. The front drum is positioned approximately behind the header and the rear drum is positioned approximately in front of the threshing system. As seen in Figure 1, the drums rotate in a counter-clockwise fashion.

The cut crop flow or crop mat is pushed by conveyor chain upwards along the floor of the feeder house and towards the threshing system. Besides lifting or elevating the cut crop to the threshing and separating systems, the feeder house provides several other functions. First, the feeder house helps to properly position the header relative to the ground. Second, the feeder house can be the location of a stone detection and removal means.

Frequently, during farming operations, the header will inadvertently receive a stone. If the stone enters the threshing system in the combine, expensive damage can result to the threshing components. It is a critical function of a stone detection and removal system to prevent a stone from damaging the threshing system. A typical stone detection and removal system is a cylindrical stone beater or stone roll positioned near the mid-point of the feeder house. The stone roll rotates allowing the crop mat to continue towards the rear drum and threshing system. A stone that is too large is forced from the feeder house through a stone trap door beneath the stone roll.

Unfortunately there are several deficiencies to the current feeder house design. The stone beater design limits the thickness of the crop flow. By limiting the amount of crop flow, it takes longer to perform farming operations. Previously, acoustic instruments have been used to detect stones entering farm equipment. Typically, the stone contacts a sounding plate and causes the sounding plate to vibrate. An acoustic instrument monitors the sounding plate and converts these vibrations into a voltage. A stone contacting the sounding plate causes the sounding plate to vibrate above a predetermined amplitude and with a unique frequency. The acoustic instrument observes these vibrations and halts the farming operation.

It has been difficult to apply this technique of stone detection to a combine harvester. Typically if a single acoustic instrument and sounding plate is used, a stone can only be detected on the side of the crop flow closest to the detector. Stones on the opposite side or centre of the crop flow are undetected. There are also additional problems with the feeder house design. Conventional stone trap ejection doors remain unlatched during farming operations. A malfunction with the spring mechanism used to keep the door closed can result in crop being inadvertently forced through the stone trap door.

The prior art illustrates these and other shortcomings. US-A-3,675,660 discloses a combine stone trap door premised on the rock detector circuit opening the stone trap door. It is possible that the stone may be embedded in the crop flow and not detected to be discharged.

US-A-4,275,546 discloses a stone discriminator using a single sounding plate to detect stones. This approach is unable to detect stones in the upper portion of the crop flow. It has not been able to successfully detect and eject stones sufficiently to be commercially viable.

US-A-4,288,969 discloses an improved stone trap seal. However, because of the angle of the conveying chain, a greater amount of crop is deflected and wasted.

US-A-4,294,062 discloses a single sensing bar positioned at the bottom of the feeder house, which is unable to sufficiently detect stones.

US-A-4,305,244, US-A-4,322,933 and US-A-4,343,137 illustrate a feeder house design for a combine. The lower sensing bar is used to trigger the stone trap door. However, the single sensing bar does not sufficiently detect the stones and the angle of the conveying chain results in more crop being deflected than necessary.

US-A-4,355,565 uses a mechanical stone beater bar to force a stone out of the crop flow. However, if the stone is too small or flat, the stone will not be detected or ejected. Also, the stone beater is only effective at lower speeds.

US-A-4,353,199 illustrates a single sensing bar used in a forage harvester.

US-A-4,768,525 illustrates a stone ejection door mechanism for harvesting equipment having front and rear stone trap doors.

US-A-4,720,962 illustrates a single sensor that can be positioned in a variety of locations on a forage harvester.

US-A-5,702,300 illustrates a combine rock door over centre closure apparatus showing a lever used to control a stone trap door.

An invention that could resolve these issues would represent an improvement to the art, such as what is disclosed by US-A-6,269,618. US-A-6,269,618 comprises a feeder house on an agricultural combine having a first acoustic array having a first sounding board and acoustic sensor positioned beneath the front drum and feeder house floor. A second acoustic array is positioned behind the front drum and between the conveyor chain encircling the front and rear drums. The second acoustic array also has a second acoustic sensor and second sounding plate. The acoustic sensor detects the impact of a stone on the sounding plates. A signal is transmitted via a controller from the sensor to a solenoid controlling a stone trap door latch. When the door opens, a sled also rotates into contact with conveyor chain. This deflects any crop flow containing stones. To close the door, the feeder house is raised and the door rotates into contact with the latch.

However, the above US-A-6,269,618 still is not without its limitations. For example, US-A-6,269,618 employs a sounding plate that has a relatively flat, smooth surface. Extremely large stones entering the combine are unable to properly impact the sounding plate mounted directly below the front roll at the entrance of the feeder house. A couple of mechanisms are responsible for this: (1) the physical size of a very large stone and the feeder front roll configuration prevents the required direct, vigorous impact of the stone on the existing flat sensor plate. Instead, the stone is pinched between the front roll and the sensor plate and scraped and/or dragged across the plate; and (2) when a very large stone does impact the sensor plate, acoustical signatures below about 2 kHz are generated, which have been found to be well below the acoustic sensor filter centre frequency of 5 kHz. Only a small amount of signal is generated within the pass band of the filter.

Thus, a very large stone is often not sensed and is thrust into the combine and can cause damage. In short, a stone scrape-dragged across the relatively flat, smooth surface of the sounding plate of the invention of US-A-6,269,618 will not generate the required impact or "excitement" signature to qualify as a stone or other hard object event noise.

Accordingly, what is sought is an improvement which overcomes one or more of the problems and shortcomings set forth above.

It is therefore an object of the invention to endeavour to provide an improved acoustic stone detection system that can detect and eject stones, wherein the acoustic stone detector has an acoustic sensor that can be positioned at an advantageous location, such as below the front drum of a feeder house.

Another object is to provide an improved sounding plate having unique surface characteristics, for the acoustic sensor.

According to the invention, there is provided apparatus for detecting hard objects in a flow of crop material softer than the hard objects as the flow flows along a flow path between harvesting apparatus of an agricultural harvesting machine and crop processing apparatus thereof, comprising:
a detector element disposed along the flow path, the detector element including a surface positioned so as to be in contact with a flow of crop material flowing along the flow path,
characterised in that the surface includes an array of elements disposed and configured for impeding passage of a hard object in a flow of crop material softer than the hard object flowing past the surface so as to generate at least one excitation of the detector element having at least one characteristic different from characteristics of excitations of the detector element caused by flow of the crop material alone therepast.

Accordingly, the invention provides for an improvement to the feeder house on an agricultural harvester such as a combine. More particularly, the invention comprises an improved acoustic stone detection system for the feeder house of an agricultural combine. The acoustic stone detection system of the invention further preferably includes an acoustic array positioned beneath a front drum of the feeder house, and having at least one acoustic sensor and a sounding plate. The sounding plate of the present invention is preferably generally parallel to the feeder house floor and includes an array of "interruptions" or "cleats" configured upon its surface, to ensure that a stone sliding over its surface, or contained in a flow of crop material therepast, impacts or "excites" the plate in a manner so as to have at least one characteristic distinguishable from excitations or impacts generated by the softer crop material alone, which characteristic preferably includes, a sufficient magnitude detectable by an acoustic sensor, and more preferably of at least a minimum threshold magnitude within a predetermined frequency range. It is contemplated that the interruptions could comprise many different embodiments.

For example, a preferred embodiment of the detector element could include interruptions as commonly used and embodied in other, unrelated applications by what is known as "diamond plate" technology. Such "diamond plate" technology is frequently used as a "no-slip surface" or in the construction of heavy-duty toolboxes, storage systems, etc.

However, it should be appreciated that the sounding plate of the present invention is not limited to use of diamond plate technology; the minimum requirement of the sounding plate of the present invention is that its surface includes an array or pattern of interruptions, such that the array or pattern of interruptions, would preclude a clear path of travel of a hard object, or a flow of crop material containing a hard object, from the front end to the rear of the sounding plate in the direction of crop flow. Accordingly, the sounding plate and surface interruptions of the present invention would dictate that an object, particularly, a hard object (i.e. a stone) travelling from the front end to the rear of the sounding plate would encounter or impact or otherwise contact at least one interruption during its travel, or cause the crop material in which the hard object is located or carried to encounter or impact or at least one interruption, to thereby creating a sufficient "excitement" signature to qualify as a stone or other hard object event noise. It is thus contemplated that the sounding plate interruptions could include, but are not limited to, any array or pattern of obtrusions that would meet the aforementioned minimum requirement, such as a "dimple" configuration, array of random weld spatters, weld beads, etc.

Embodiments of the present invention will now be described in further detail, by way of example only, with reference to the accompanying drawings, wherein:
Figure 1 is an over-all side elevation of a combine equipped with a feeder house and a header, the feeder house including a stone detection system of the invention therein;
Figure 2 is a side elevation of the feeder house, illustrating internal features of the invention in dotted lines;
Figure 3 is another side elevation of the feeder house, showing rotational movement of a stone trap door thereof;
Figure 4 is another side elevation the feeder house, showing in dotted lines rotational movement of the feeder house wherein a door cable pulls the stone trap door closed;
Figure 5 is a fragmentary side elevation of the feeder house, including a cut-away of the side thereof, to provide a close-up view of aspects of the system of the invention, including a sounding plate thereof;
Figure 6 is a cut-away, close-up view of the aspects of the system of the invention shown in Figure 5, showing a crop flow with stones passing through the feeder house and over the sounding plate of the invention;
Figure 7 is a front, left perspective view of the feeder house, showing one embodiment of an improved sounding plate of the present invention, which is a representative diamond plate, showing "interruptions" configured into the surface of the sounding plate according to the invention;
Figure 8 is a front, left perspective, close-up view the improved sensor plate of Figure 7;
Figure 9 is another cut-away, close-up view of a system of the invention, showing a flow of crop material carrying a stone, interacting with an interruption on the surface of the sensor plate to generate an excitation thereof according to the invention;
Figure 10 is a fragmentary perspective view of another preferred embodiment of a sounding plate according to the invention;
Figure 11 is a fragmentary perspective view of another preferred embodiment of a sounding plate according to the invention;
Figure 12 is a fragmentary perspective view of still another preferred embodiment of a sounding plate according to the invention;
Figure 13 is a fragmentary perspective view of still another preferred embodiment of a sounding plate according to the invention;
Figure 14 is a simplified schematic representation of one detection circuit for the stone detection system of the invention; and
Figure 15 is a simplified diagrammatic representation showing preferred aspects and operating steps of another detection circuit for the system of the invention.

Referring to the drawings, wherein like items are identified by like numerals, it is possible to observe the major elements and general operation of the present invention. Left and right references are used as a matter of convenience and are determined by standing at the rear of the combine and facing the forward end in the normal direction of travel. Likewise, forward and rearward are determined by normal direction of travel of the combine. Upward or downward orientations are relative to the ground or operating surface. Horizontal or vertical planes are also relative to the ground.

As seen in Figure 1, the invention is located on a typical combine 1 (i.e. twin rotor or single, axial flow rotor) having front wheels 8 (only one shown) and rear wheels 9 (only one shown) for providing movement over the ground. At the front of the combine is a header 12 having a cutting bar 17 for cutting a crop. As the combine 1 and header 12 are moved forward, the cutting bar 17 of header 12 cuts the stalks carrying grain. The header 12 moves the grain and stalks into an auger trough 14. A transverse auger 15 pushes the grain and stalks in the auger trough 14 to the centre of the header.

The header 12 illustrated in Figure 1 is a wheat or similar small grain header, but the present invention can also be utilized with headers for other crops, such as a corn header (not shown), which other headers are well known in the art. The header 12 may be positioned and re-positioned relative to the ground. The header 12 may also be tilted to the left or right or may be positioned relatively high or low to the ground. These features are constantly being adjusted depending on the terrain and crop conditions. The header reel 13 may also be positioned relative to the header 12. The position and rotation of the header reel 13, again depends on the terrain and crop conditions. Moveable headers and header reels are well known and established in the art. Located at the centre of the header is the feeder house 21 or elevator. The feeder house 21 moves the grain and stalks rearward into a threshing system 3, which separates the grain and related crop material from the stalks. The stalks are then discharged from the rear of the combine 1, for instance using a spreader/chopper 10, and the grain and related crop material such as pods, pod fragments, and other smaller elements of crop material is processed by a cleaning system 4 of the combine 1 to clean the grain from the other crop material, all in the well known manner.

After separation and cleaning, the clean grain is stored in a grain tank 5 located near the top of the combine 1. The grain is removed from the grain tank 5 by an unloading auger (not shown) through the grain tank unload tube 6. Usually during the harvesting operations, the unloading auger remains off and the grain tank unload tube 6 remains positioned by the grain tank 5. However, the combine can be unloaded "on the go". A separate vehicle such as a truck or tractor-pulled grain cart follows the operator for this, as is also well known.

The processed grain can be discharged while the combine and separate vehicles are moving. After sufficient grain has been accumulated in the grain tank 5, the operator activates the unload tube 6. The operator 11 then positions the end of the unload tube 6 over a receptacle. Unloading augers and unload auger grain tubes are also well known and established in the art. The operator 11 controls the combine 1 from the cab 2 located behind the header 12 and at the front of the combine. From the cab 2 the operator 11 can observe most of the various combine functions. The cab 2 usually has a large glass window or several windows which afford the operator 11 the maximum ability to monitor the header 12. The combine 1 and various systems are powered by an engine 7 generally positioned at the rear of the combine 1. Most of the major systems in a combine are discussed and well known in the prior art.

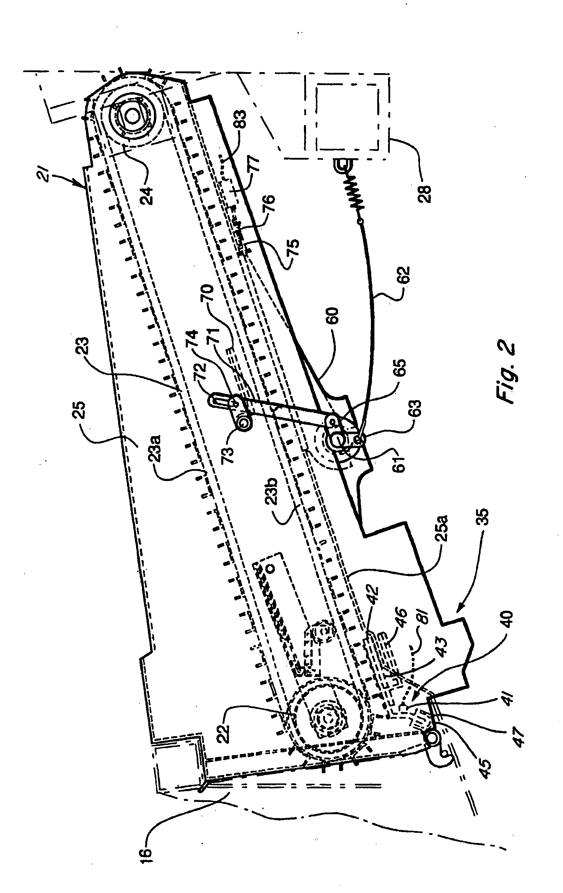

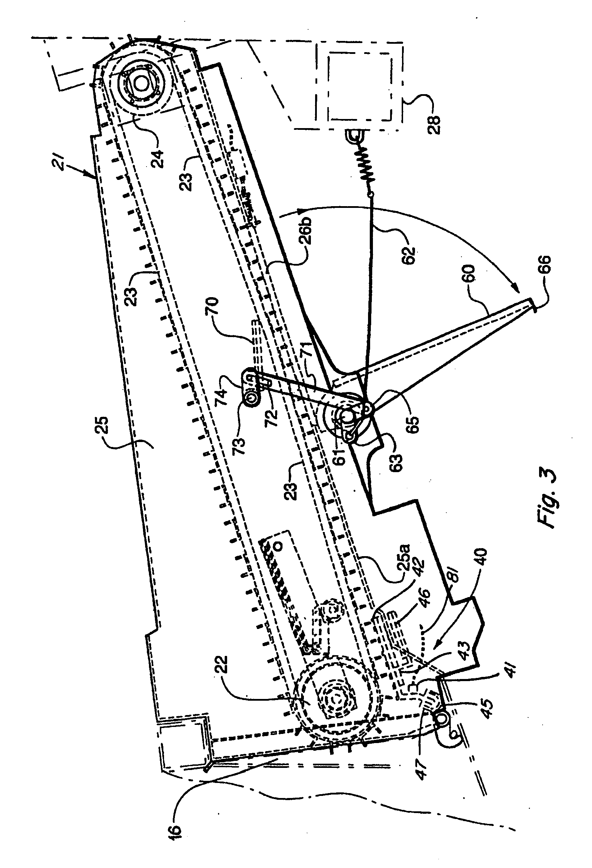

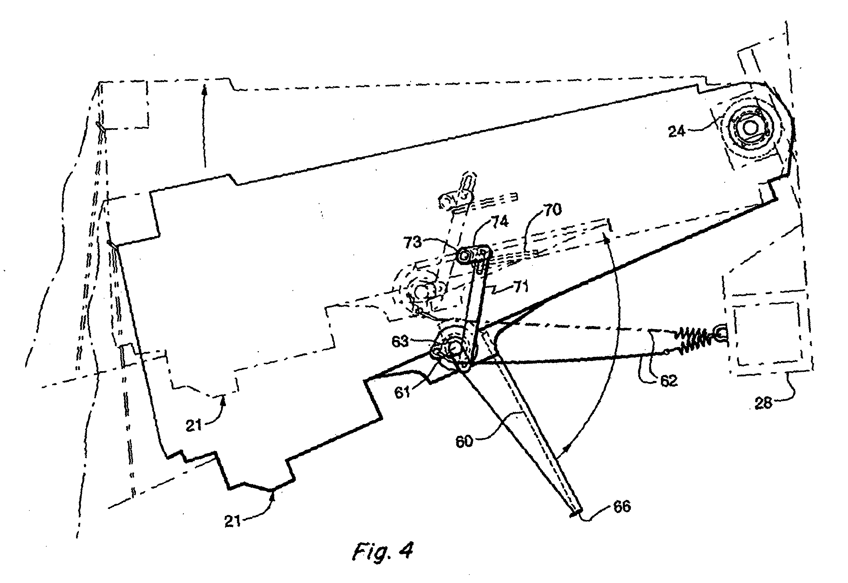

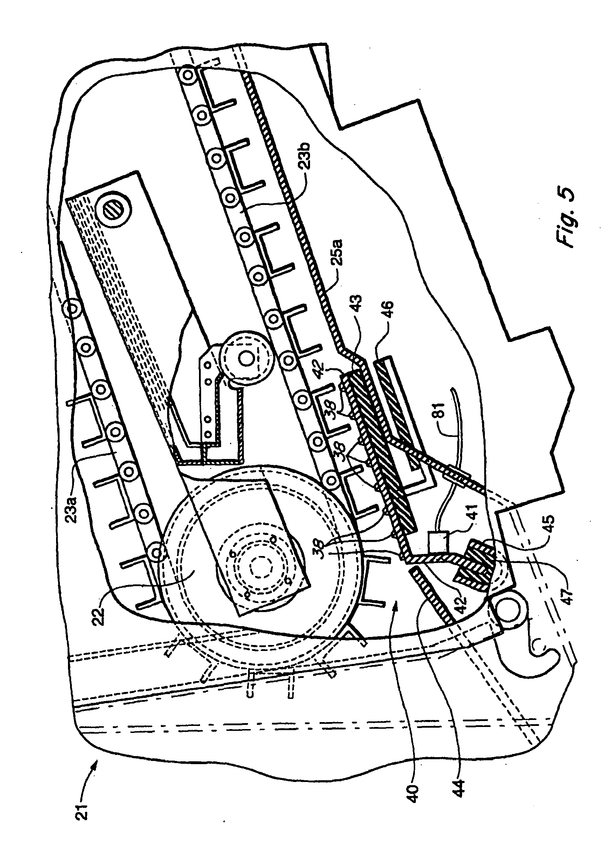

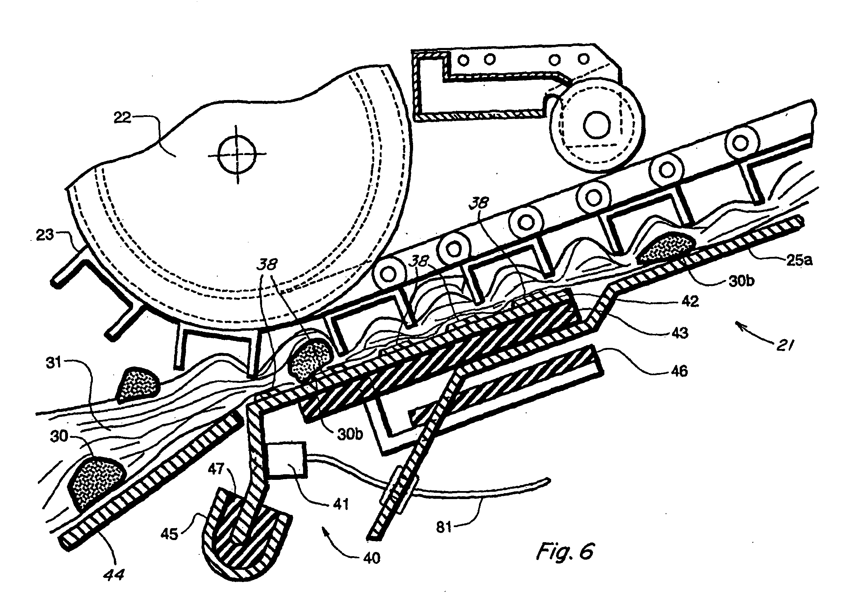

An acoustic stone detection system 35 constructed and operable according to the teachings of the invention for a combine harvester feeder house 21, may generally be observed in Figure 1 and more specifically in Figures 2 through 15. As seen in Figure 2, system 35 includes an acoustic array 40 located adjacent to a front inlet opening 16 of feeder house 21, proximate to the front drum 22 thereof. When a stone or other hard object is detected by acoustic array 40, the acoustic array 40 transmits a signal that triggers an actuator, such as, but not limited to, a solenoid 77. The solenoid 77 or other actuator opens a latch 75 allowing a stone trap door 60 to fall open (see Figures 3 and 4). This allows a stone detected by acoustic array 40, such as stone 30b illustrated in Figure 6, to drop out of the feeder house 21 through a now open floor aperture 26b. The operator then raises the feeder house 21 (as seen in Figure 4), such that the door cable 62 pulls the stone trap door 60 into contact with the latch 75, to close the aperture 26b.

Referring more particularly to Figures 3 and 4, the stone trap door 60 is pivotally attached to the feeder house floor 25a by a hinge 61. When the door 60 is closed (as seen in Figure 2), it seals the floor aperture 26b. Affixed to the arm 63 of the hinge 61 is the door cable 62 and sled link 65. Pivotally attached to the sled link 65 is the sled linkage 71. The sled linkage 71 has a linkage slot 72. Located between an upper apron 23a and a lower apron 23b of an apron 23 is a stone ejection sled 70. The ejection sled 70 is pivotally attached to opposite sidewalls 25 of feeder house 21 by a sled hinge 73. Affixed to the sled hinge 73 is a sled hinge link 74. The opposite end of the sled hinge link 74 is slidably attached to the sled linkage 71 through the linkage slot 72.

Upon receiving a signal, the solenoid 77 or other actuator retracts a spring 76-biased latch 75 holding the stone trap door 60 closed. As seen in Figure 3, after the latch is retracted, the stone trap door 60 rotates downward allowing a portion of the crop flow containing a stone to exit through the floor aperture 26b. At the same time, the sled link 65 rotates clockwise (as viewed in Figure 3) pulling the sled linkage 71 and sled hinge link 74 downward. This rotates the sled hinge and attached stone ejection sled 70 downwards. The sled 70 contacts and deflects the lower apron 23b downwards. This helps to deflect the crop flow 31 containing a stone through the floor aperture 26b. In the preferred embodiment, the stone trap door 60 rotates approximately 75 degrees and the stone ejection sled rotates approximately 25 degrees.

Figure 4 illustrates how the stone trap door 60 is closed over the floor aperture 26b. While the door 60 is open, the feeder house 21 is raised or rotated clockwise about the rear drum 24. A door cable 62 attached to the cable link 62 and combine frame 28 tightens and rotates the stone door 60 counter-clockwise. The spring-biased latch 75 is inserted through a latch catch on the door 60. This ensures that the door remains closed, thus preventing any inadvertent crop loss. The operation of the solenoid 77 or other actuator for controlling latch 75, can be controlled by suitable control circuitry of the stone detection system 35, several preferred embodiments of which circuitry is described hereinbelow.

In summary, the stone detection system 35 will operate as follows. A stone enters the header 12 and is moved with the crop flow to the feeder house 21. The crop flow 31 passes between the front drum 22 and feeder house floor 25a. Stone 30b, or the crop flow containing the stone 30b, contacts at least one interruption 38 on sounding plate 42, sufficiently to excite the sounding plate 42 in the above-described manner. When the stone hits the sounding plate 42, one or both acoustic sensors 41 detect the impact and transmits a sensor signal through the sensor wire 81 or 82 to the detection circuit of system 35. System 35 can include, or be connected with, a variety of different embodiments of a detection circuit operable for receiving the signals from the at least one sensor 41, and triggering operation of the solenoid 77.

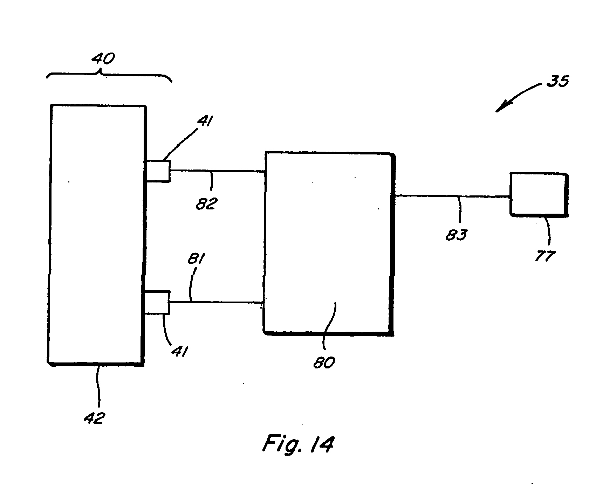

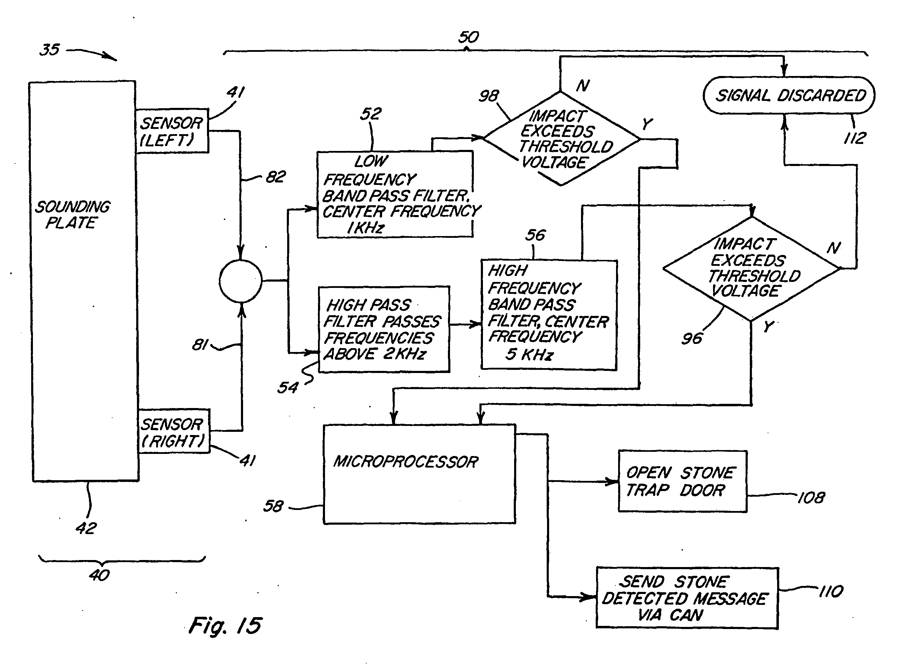

For instance, as shown in Figure 14, in a simple embodiment of a detection circuit, one or more acoustic sensors 41 in association with sounding plate 42 can be connected by a suitable conductive path, for instance, one or more sensor wires 81 and 82, to a controller 80, which can be, for instance, a conventional, commercially available microprocessor based controller operable for differentiating signal characteristics representative of hard objects from those of the softer crop material. Such characteristics can include, for instance, an impact sound of at least a predetermined magnitude which signifies a stone or other hard object impact, greater than an impact magnitude expected from softer crop material. The controller 80, in turn, is connected by a suitable conductive path, such as a solenoid wire 83, to solenoid 77, for responsively operating the solenoid. Another preferred embodiment of a detection circuit is discussed below in reference to Figure 15.

The stone ejection aspect of the system thus operates as follows, the controller 80 transmits a solenoid signal through the solenoid wire 83 to the solenoid 77. The solenoid 77 retracts the latch 75 from the latch catch 66 on the stone trap door. The stone trap door swings open allowing the portion of the crop flow containing a stone to exit the feeder house 21 through the floor aperture 26b. The sled link attached to the hinge 61 pulls the sled linkage 71 and sled hinge link 74 downwards. The sled hinge link 74 rotates the sled hinge 73. The ejection sled, which is affixed to the sled hinge 73, is rotated into contact with the lower apron 23b. The sled 70 deflects the lower apron 23b and helps eject additional crop flow containing any stones. After the stone is ejected, the feeder house 21 is raised. A door cable 62 pulls the stone trap door 60 closed. The latch 75 is then re-inserted into the latch catch 66.

The acoustic array 40 of stone detection system 35 is located beneath the front drum 22. As noted above, it comprises at least one acoustic sensor 41 monitoring a sounding plate 42. In the preferred embodiment, the acoustic sensor 41 is an accelerometer, such as, for instance, a Bosch^{™} sensor, model number 84058692. As other possible examples, the acoustic sensor 41 could also be a microphone or similar listening device. The acoustic sensor 41 is preferably affixed to the sounding plate 42. The sounding plate 42 extends roughly parallel to the feeder house floor 25a. The sounding plate 42 is positioned beneath the front drum 22 and behind an entry plate 44 extending from the header 12. To prevent the sounding plate 42 from detecting stray sounds, the plate is insulated from the remainder of the feeder house. Between the sounding plate 42 and the feeder house floor 25a is an insulated plate 43. Beneath the feeder house floor 25a is a second insulated plate 46.

The front end of the sounding plate 42 is contoured to partially project beneath the entry plate 44 to further minimize the acoustic sensor 41 from receiving stray noise. A "U" channel 45 supports this contoured portion of the sounding plate 42. The "U" channel is insulated with "U" channel insulation 47 so as to minimize stray noise. The acoustic sensor 41 transmits a sensor signal through a sensor wire 81. A stone 30 or 30b (Figure 6) impacting the sounding plate 42 is detected by the acoustic sensor and/or sensors 41, which send a signal through the sensor wire 81 and/or 82, to the detection circuit.

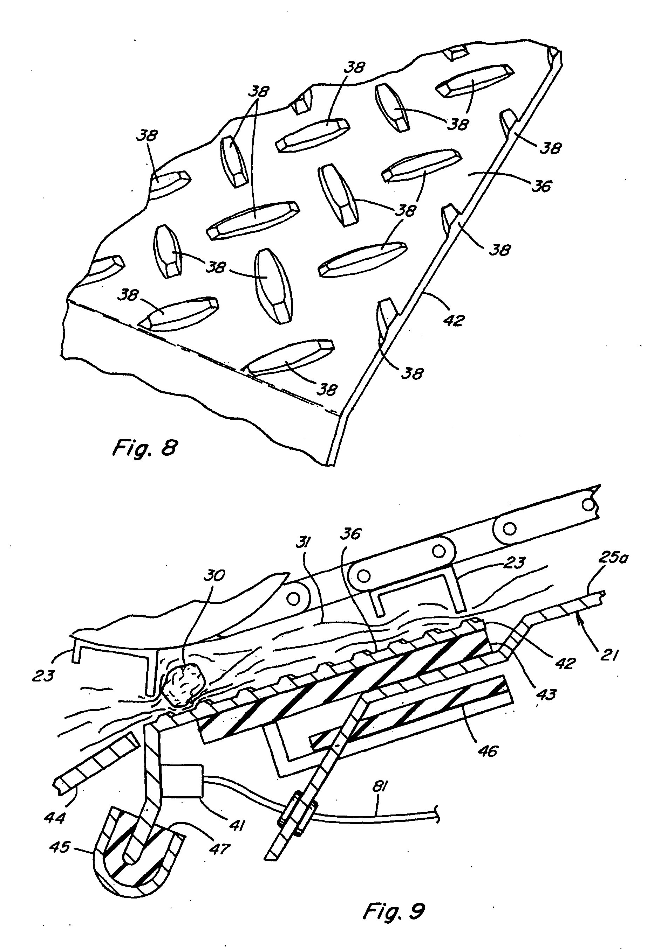

The acoustic stone detection system 35 of the invention serves to both detect and to remove any foreign hard objects from a flow of cut crop material 31 (Figures 6 and 9) passing through the feeder house 21, thereby producing a flow of cut crop matter beyond trap door 60 that is essentially free of foreign hard objects. To facilitate this, the sounding plate 42 is preferably positioned in spaced relation beneath the front drum 22, such that flows of cut crop material 31 fed into feeder house 21 will be forceably urged or driven over an upper surface 36 of the sounding plate 42. The upper surface 36 of the sounding plate 42 is preferably at least generally parallel to the feeder house floor 25a and includes at least one and preferably an array of interruptions 38 or cleats configured thereon, to ensure that a stone (illustrated by stones 30 and 30b in Figure6) sliding thereover, or contained in a flow of crop material 31 flowing thereover (Figure 9), impacts or contacts one or more of the interruptions 38 sufficiently to excite or vibrate the plate 42 to a sufficient magnitude so as to be detectable by an acoustic sensor 41, and such that the excitations or vibrations of the plate 42 detected by the sensor or sensors 41 will have at least one characteristic distinguishable from characteristics of excitations or vibrations of the plate 42 caused by passage thereover of the crop material alone. Here, a preferred distinguishing characteristic is amplitude of the excitation or vibration and resultant signal. This may be within a predetermined frequency range or ranges typical for a stone or other hard object impact, as contrasted with an impact by the softer crop material alone. It is contemplated that the interruptions 38 could comprise many different embodiments.

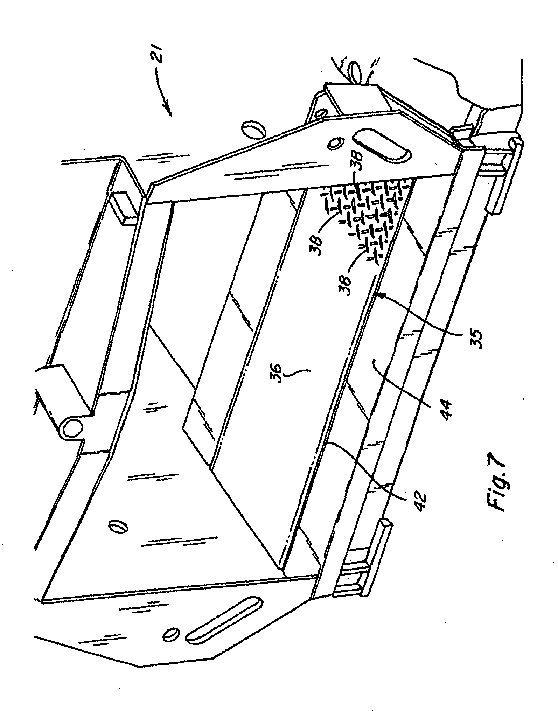

For example, a preferred embodiment of the sounding plate 42, as best shown in Figures 7 and 8, which has been found to produce suitable excitations, includes interruptions 38 on surface 36 thereof, as commonly used and embodied by "diamond plate" technology. Such "diamond plate" technology is frequently used as a "no-slip surface" or in the construction of heavy-duty toolboxes, storage systems, etc. as is commercially available and is commonly classified as ASTM A-786. It should be understood that the preferred pattern of diamond plate technology is not limited to what is illustrated herein as a multitude of other shapes and sizes of diamond plate technology exist.

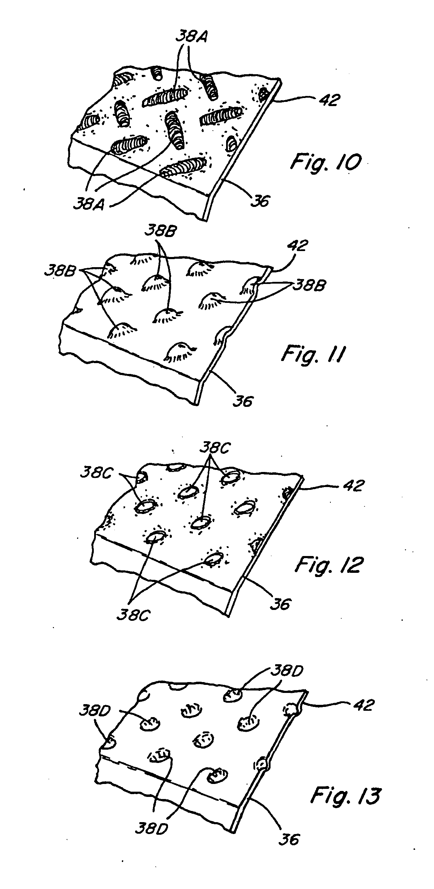

It should be further appreciated that the sounding plate 42 of the present invention is not limited to use of diamond plate technology; the minimum requirement of the preferred sounding plate 42 of the present invention is that its surface 36 include an array or pattern of interruptions 38, such that the one, or the array or pattern of interruptions 38 would preclude a clear path of travel of a hard object, or crop material containing a hard object, from the front end to the rear of the sounding plate 42 in the direction of crop flow. Accordingly, the sounding plate 42 and the surface interruptions 38 of the present invention would dictate that a hard object (i.e. a stone) travelling from the front end to the rear of the sound plate 42 would encounter and contact or impact, or cause the surrounding crop material to contact or impact, the at least one interruption 38 during its travel, thereby creating a sufficient "excitement" signature to qualify or distinguish itself as a stone or other hard object event noise. This is preferably in terms of magnitude or amplitude of the resultant noise, and more preferably, the occurrence of such amplitude within a predetermined frequency range. It is thus contemplated that the interruptions 38 could include, but are not limited to, any array or pattern of obtrusions that would meet the aforementioned minimum requirement, such as, but not limited to, a raised cleat such as embodied in the diamonds of the interruptions 38, or a "dimple" configuration (see dimples 38D in Figure 13), which would be indented or recessed into surface 36, or as an array other raised elements, such as a predetermined or random array of weld spatters, etc.

Referring also to Figures 10, 11, 12 and 13, the sounding plate 42 is shown including various alternative embodiments of interruptions which are considered suitable for causing the desired excitations of plate 42 as crop material flow containing one or more hard objects pass thereover, including raised, elongated weld beads 38A in a diamond pattern (Figure 10); an array of discrete raised obtrusions or bumps 38B (Figure 11); an array of generally round beads 38C (Figure 12); and an array of recessed or indented dimples 38D (Figure 13).

Preferably, each sensor 41 is an acoustic sensor, although the invention is not limited to acoustic sensors. Furthermore, the invention can be practiced using a sensor array, so that sensor 41 could actually be an array of two or several sensor devices, as illustrated by the two sensors 41 in Figures 14 and 15.

Referring also to Figure 15, a preferred embodiment of another stone detection circuit 50 automatically operable for controlling operation of an actuator of stone detection system 35, such as the solenoid 77, upon receipt of an activation signal from acoustic array 40 including the at least one predetermined characteristic, is illustrated. In Figure 15, acoustic array 40 is shown configured to include two sensors 41 in connection with sounding plate 42, and the outputs of sensors 41 outputted over the sensor wires 81 and 82 are summed, and outputted to detection circuit 50. The summed sensor signals are sent over two conductive paths, including to a low frequency bandpass filter 52, which outputs only signal components within a frequency range centred about a 1kHz centre frequency (one predetermined characteristic) and to a high pass filter 54, which outputs only signal components above a selected frequency, here, preferably being 2 kHz (another characteristic). Low frequency bandpass filter 52, is in turn, connected to a variable or fixed threshold comparator (not shown) which determines if an impact exceeds a threshold voltage (another characteristic) representative of impact magnitude, as illustrated at decision block 98. If so, the signal is outputted to a microprocessor 58. The high pass filter 54 is connected to a high frequency bandpass filter 56, which, in turn, is connected to another variable or fixed threshold comparator (not shown), which also determines if an impact exceeds a threshold voltage, as illustrated at decision block 96. If so, the signal from that comparator is outputted to the microprocessor 58. If the signals from filters 52 and 56 do not exceed the threshold voltages, they are discarded, as denoted by block 112. When the microprocessor 58 receives a signal which exceeds the threshold voltage, the stone trap door 60 is opened, as denoted by block 108, and a stone detected message can be optionally outputted via a controller area network, (CAN), as denoted by block 110. Thus, the impact, to qualify as a hard object impact, must have an excitation signature within a predetermined frequency range, and of a minimum predetermined magnitude.

Each sensor 41 can additionally be optionally electrically connected to provide an object sensing input signal to an optional programmable amplifier (not shown), and to high pass filter 54. Sensors 41 can also provide an input signal to the microprocessor 58 in response to a feedback signal from processor 58. This feedback loop between sensors 41 and processor 58 gives the processor the ability to monitor the operation (i.e., activation status or sensitivity) of the sensors 41. In other words, the signals would provide a self-diagnostic feedback loop between the sensors 41 and the processor 58, thereby providing the processor 58 with the capability to monitor the signal levels of sensors 41 and to determine fault conditions for the sensors 41, as well as with other input sub-systems in conjunction with the current state of the harvester 1 (i.e., whether the reel assembly running/reel assembly is or is not running).

It is known by anyone reasonably knowledgeable in the art that very large stones produce vibration signals from a sensor 41 that are significantly lower in frequency than those produced by medium and smaller stones. In order to prevent interference by the signal of the very large stones with the signal of smaller stones, the signals of sensors 41 are processed through detection circuit 50 via the two circuit or signal paths illustrated. Low frequency bandpass filter 52, and the associated voltage comparator and optional amplifier form one signal path to amplify, select, and qualify signals from sensors 41 that only correspond to the very largest of stones that can enter the feeder house 21. Low frequency bandpass filter 52 is set to reject signals produced from sensors 41 caused by medium and smaller size stones.

In like manner, high pass filter 54, high frequency bandpass filter 56, and the associated voltage comparator and optional amplifier form another path to amplify, select and qualify signals from sensors 41 that only correspond to medium and small stones. Vibrations in the sounding plate 42 corresponding to very large stones and other low frequency crop and machine noises are rejected by high pass filter 54 so that only signals from sensors 41 corresponding to medium and small stones are passed on to high frequency bandpass filter 56. A significant difference in this signal path is that high pass filter 54 is set to reject low frequency signals from the very large stones.

The signals from the voltage comparators are received by microprocessor 58. The magnitude of amplification performed by the optional amplifiers is controlled by microprocessor 58, which sends a control signal to control the degree to which the amplifiers amplify, either positively or negatively, the magnitude of the signals. In this manner, the microprocessor can adapt the amplifiers to various internal and/or external influences on signal strength over a broader range of amplitudes.

High pass filter 54 and high frequency bandpass filter 56 generally filter out low frequency signals such as would be generated by soft organic crop material and very large stones passing through feeder house 21, but transmit high frequency signals such as would be generated by medium and small hard objects or stones to be separated from the desired crop matter. Similarly, low frequency bandpass filter 52 accepts signals produced by the very largest stones and rejects signals produced by the smaller and medium size stones.

It will be obvious to those skilled in the art that various changes may be made without departing from the scope of the invention as defined by the claims and the invention is not to be considered limited to what illustrated in the drawings and described in the specification.

## Claims

1. Apparatus (35) for detecting hard objects (30) in a flow of crop material (31) softer than the hard objects as the flow flows along a flow path between harvesting apparatus (12) of an agricultural harvesting machine (1) and crop processing apparatus (3) thereof, comprising:
a detector element (42) disposed along the flow path, the detector element including a surface (36) positioned so as to be in contact with a flow of crop material (31) flowing along the flow path,
**characterised in that** the surface (36) includes an array of elements (38/38A/38B/38C/38D) disposed and configured for impeding passage of a hard object (30) in a flow of crop material (31) softer than the hard object (30) flowing past the surface (36) so as to generate at least one excitation of the detector element (42) having at least one characteristic different from characteristics of excitations of the detector element caused by flow of the crop material (31) alone therepast.

2. Apparatus according to claim 1, **characterised in that** the detector element comprises a sounding plate (42) and the at least one excitation of the detector element comprises a vibration of the sounding plate.

3. Apparatus according to claim 1 or 2, **characterised in that** the array of elements (38/38A/38B/38C) protrudes from the surface (36) of the detector element (42) and is configured for generating the at least one excitation of the detector element when a hard object (30) moves therepast.

4. Apparatus according to claim 3, **characterised in that** the array of elements comprises an array of elongate elements (38/38A), at least some of the elongate elements being oriented at an acute angle to a direction of the flow.

5. Apparatus according to claim 4, **characterised in that** the elongate elements (38/38A) of the array are arranged in a diamond shaped pattern.

6. Apparatus according to claim 5, **characterised in that** the detector element (42) comprises a diamond plate.

7. Apparatus according to any of the claims 3 to 5, **characterised in that** the array of elements protruding from the surface (36) of the detector element (42) comprises weld beads (38A/38C) or elements of weld splatter.

8. Apparatus according to claim 1 or 2, **characterised in that** the array of elements comprises an array of dimples (38C) or bumps (38B).

9. Apparatus according to any of the preceding claims, **characterised in that** the detector element (42) is disposed below the flow path such that a flow of crop material (31) will flow thereover.

10. Apparatus according to any of the preceding claims, **characterised in that** it further comprises at least one sensor (41) disposed for sensing the at least one excitation generated by presence of a hard object (30) in a flow of crop material (31) flowing past the array of elements (38/38A/38B/38C/38D).

11. Apparatus according to claim 10, **characterised in that** it comprises two of the sensors (41) disposed at spaced locations in connection with the detector element (42).

12. Apparatus according to any of the preceding claims, **characterised in that** the at least one characteristic comprises a frequency and/or an amplitude.

13. Apparatus according to any of the preceding claims, **characterised in that** the array of elements (38/38A/38B/38C/38D) is configured and positioned such that a hard object (30) present in a flow of crop material (31) flowing past the array will cause an impact with the array sufficient for generating the at least one excitation, and the at least one characteristic comprises an amplitude of at least a predetermined level within a predetermined frequency range.

## Patentansprüche

1. Vorrichtung (35) zur Detektion harter Gegenstände (30) in einer Strömung eines Erntematerials (31), das weicher als die harten Gegenstände ist, während die Strömung entlang eines Strömungspfades zwischen einer Erntevorrichtung (12) einer landwirtschaftlichen Erntemaschine (1) und einer Erntematerial-Verarbeitungsvorrichtung (3) hiervon strömt, mit:
einem Detektorelement (42), das entlang des Strömungspfades angeordnet ist, wobei das Detektorelement eine Oberfläche (36) einschließt, die derart angeordnet ist, dass sie in Kontakt mit einer Strömung des Erntematerials (31) steht, das entlang des Strömungspfades strömt,
**dadurch gekennzeichnet, dass** die Oberfläche (36) eine Anordnung von Elementen (38/38A/38B/38C/38D) einschließt, die so angeordnet und konfiguriert sind, dass sie den Durchgang eines harten Gegenstandes (30) in der Strömung des Erntematerials (31), das weicher als der harte Gegenstand (30) ist und an der Oberfläche (36) vorbeiströmt, behindert, so dass zumindest eine Anregung des Detektorelementes (42) mit zumindest einer Charakteristik erzeugt wird, die von den Charakteristiken von Anregungen des Detektorelementes verschieden ist, die durch die Strömung des Erntematerials (31) an diesem vorbei hervorgerufen werden.

2. Vorrichtung nach Anspruch 1, **dadurch gekennzeichnet, dass** das Detektorelement eine Schall-Platte (42) umfasst, und dass die zumindest eine Anregung des Detektorelementes eine Schwingung der Schall-Platte umfasst.

3. Vorrichtung nach Anspruch 1 oder 2, **dadurch gekennzeichnet, dass** die Anordnung von Elementen (38/38A/38B/38C) von der Oberfläche (36) des Detektorelementes (42) vorspringt und zur Erzeugung der zumindest einen Anregung des Detektorelementes konfiguriert ist, wenn ein harter Gegenstand (30) an diesem vorbei bewegt wird.

4. Vorrichtung nach Anspruch 3, **dadurch gekennzeichnet, dass** die Anordnung von Elementen eine Anordnung von lang gestreckten Elementen (38/38A) umfasst, wobei zumindest einige der lang gestreckten Elemente unter einem spitzen Winkel zur Richtung der Strömung ausgerichtet sind.

5. Vorrichtung nach Anspruch 4, **dadurch gekennzeichnet, dass** die lang gestreckten Elemente (38/38A) der Anordnung in einem diamantförmigen Muster angeordnet sind.

6. Vorrichtung nach Anspruch 5, **dadurch gekennzeichnet, dass** das Detektorelement (42) eine Diamantplatte umfasst.

7. Vorrichtung nach einem der Ansprüche 3 bis 5, **dadurch gekennzeichnet, dass** die Anordnung von Elementen, die von der Oberfläche (36) des Detektorelementes (42) vorspringen, Schweißraupen (38A/38C) oder Elemente von Schweiß-Spritzern umfasst.

8. Vorrichtung nach Anspruch 1 oder 2, **dadurch gekennzeichnet, dass** die Anordnung von Elementen eine Anordnung von Vertiefungen (38C) oder Höckern (38B) umfasst.

9. Vorrichtung nach einem der vorhergehenden Ansprüche, **dadurch gekennzeichnet, dass** das Detektorelement (42) unterhalb des Strömungspfades derart angeordnet ist, dass eine Strömung des Erntematerials (31) über dieses strömt.

10. Vorrichtung nach einem der vorhergehenden Ansprüche, **dadurch gekennzeichnet, dass** sie weiterhin zumindest einen Sensor (41) umfasst, der zur Messung der zumindest einen Anregung angeordnet ist, die durch das Vorhandensein eines harten Gegenstandes (30) in der Strömung des Erntematerials (31) erzeugt wird, das über die Anordnung von Elementen (38/38A/38B/38C/38D) hinweg strömt.

11. Vorrichtung nach Anspruch 10, **dadurch gekennzeichnet, dass** sie zwei der Sensoren (41) umfasst, die an mit Abstand voneinander angeordneten Stellen in Verbindung mit dem Detektorelement (42) angeordnet sind.

12. Vorrichtung nach einem der vorhergehenden Ansprüche, **dadurch gekennzeichnet, dass** die zumindest eine Charakteristik eine Frequenz und/oder eine Amplitude umfasst.

13. Vorrichtung nach einem der vorhergehenden Ansprüche, **dadurch gekennzeichnet, dass** die Anordnung von Elementen (38/38A/38B/38C/38D) derart konfiguriert und angeordnet ist, dass ein harter Gegenstand (30), der in einer Strömung von Erntematerial (31) vorhanden ist, das über die Anordnung hinweg strömt, einen Zusammenprall mit der Anordnung hervorruft, der ausreicht, um die zumindest eine Anregung zu erzeugen, und dass die zumindest eine Charakteristik eine Amplitude mit zumindest einem vorgegebenen Pegel innerhalb eines vorgegebenen Frequenzbereiches umfasst.

## Revendications

1. Dispositif (35) de détection d'objets durs (30) dans un flux de produit récolté (31) plus tendre que les objets durs alors que le flux circule le long d'une trajectoire de flux entre le dispositif de récolte (12) d'une machine agricole de récolte (1) et le dispositif de traitement du produit (3) de celle-ci, comprenant :
un élément détecteur (42) disposé le long de la trajectoire de flux, l'élément détecteur comprenant une surface (36) positionnée de sorte à être en contact avec un flux de produit récolté (31) circulant le long de la trajectoire de flux,
**caractérisé en ce que** la surface (36) comprend un groupement d'éléments (38/38A/38B/38C/38D) disposés et configurés pour entraver le passage d'un objet dur (30) dans un flux de produit récolté (31) plus tendre que l'objet dur (30) circulant devant la surface (36) de manière à générer au moins une excitation de l'élément détecteur (42) ayant au moins une caractéristique différente des caractéristiques des excitations de l'élément détecteur induites par le flux du produit récolté (31) seul passant devant celui-ci.

2. Dispositif selon la revendication 1, **caractérisé en ce que** l'élément détecteur comprend une plaque de sondage (42) et la au moins une excitation de l'élément détecteur comprend une vibration de la plaque de sondage.

3. Dispositif selon la revendication 1 ou 2, **caractérisé en ce que** le groupement d'éléments (38/38A/38B/38C) dépasse de la surface (36) de l'élément détecteur (42) et il est configuré pour générer au moins une excitation de l'élément détecteur si un objet dur (30) passe devant celui-ci.

4. Dispositif selon la revendication 3, **caractérisé en ce que** le groupement d'éléments comprend un groupe d'éléments allongés (38/38A), au moins certains des éléments allongés étant orientés à un angle aigu par rapport a un sens du flux.

5. Dispositif selon la revendication 4, **caractérisé en ce que** les éléments allongés (38/38A) du groupe sont disposés dans une configuration en forme de losange.

6. Dispositif selon la revendication 5, **caractérisé en ce que** l'élément détecteur (42) comprend une plaque de diamant.

7. Dispositif selon l'une quelconque des revendications 3 à 5, **caractérisé en ce que** le groupement d'éléments dépassant de la surface (36) de l'élément détecteur (42) comprend des cordons de soudure (38A/38C) ou des éléments de projection de soudure.

8. Dispositif selon la revendication 1 ou 2, **caractérisé en ce que** le groupement d'éléments comprend un groupe de protubérances (38C) ou de bosses (38B).

9. Dispositif selon l'une quelconque des revendications précédentes, **caractérisé en ce que** l'élément détecteur (42) est disposé en dessous de la trajectoire du flux de telle sorte qu'un flux de produit (31) passe au-dessus de celui-ci.

10. Dispositif selon l'une quelconque des revendications précédentes, **caractérisé en ce qu'**il comprend en plus au moins un capteur (41) disposé pour détecter au moins une excitation générée par la présence d'un objet dur (30) dans un flux de produit récolté (31) circulant devant le groupement d'éléments (38/38A/38B/38C/38D).

11. Dispositif selon la revendication 10, **caractérisé en ce que** il comprend deux des capteurs (41) disposés à des emplacements espacés en connexion avec l'élément détecteur (42).

12. Dispositif selon l'une quelconque des revendications précédentes, **caractérisé en ce que** la au moins une caractéristique comprend une fréquence et/ou une amplitude.

13. Dispositif selon l'une quelconque des revendications précédentes, **caractérisé en ce que** le groupement d'éléments (38/38A/38B/38C/38D) est configuré et positionné de telle sorte qu'un objet dur (30) présent dans un flux de produit récolté (31) passant devant le groupement provoquera un impact avec le groupement suffisant pour générer la au moins une excitation, et la au moins une caractéristique comprend une amplitude d'au moins un niveau prédéterminé dans une gamme de fréquences prédéterminée.
